# EUROPEAN PATENT SPECIFICATION

(11) **EP 3 965 005 B1**
(45) Date of publication and mention of the grant of the patent: **18.02.2026**
(21) Application number: 20823164.7
(22) Date of filing: 05.06.2020
(51) Int. Cl.: G06V 10/82, G06T 3/047, G06V 20/56, G06V 10/147, G06V 10/10, G06V 10/80

(54) **TARGET DETECTION METHOD AND DEVICE**
ZIELERKENNUNGSVERFAHREN UND -VORRICHTUNG
PROCÉDÉ ET DISPOSITIF DE DÉTECTION DE CIBLE

(30) Priority: 10.06.2019 CN 201910498217
(43) Date of publication of application: 09.03.2022
(73) Proprietor: Shenzhen Yinwang Intelligent Technologies Co., Ltd., Shenzhen, Guangdong 518129 (CN)
(72) Inventor: SUN, Xutong, Shenzhen, Guangdong 518129 (CN); LI, Junchao, Shenzhen, Guangdong 518129 (CN); ZHANG, Wei, Shenzhen, Guangdong 518129 (CN); LING, Li, Shenzhen, Guangdong 518129 (CN); CHEN, Xi, Shenzhen, Guangdong 518129 (CN)
(74) Representative: Pfenning, Meinig & Partner mbB
(86) International application number: PCT/CN2020/094612
(87) International publication number: WO 2020/248910

(56) References cited:
- CN-A- 103 914 821
- CN-A- 106 408 950
- CN-A- 107 306 338
- CN-A- 109 598 747
- CN-U- 208 036 106
- US-A1- 2015 302 561
- US-A1- 2018 165 829
- US-B1- 10 055 853

## Description

### TECHNICAL FIELD

This application relates to intelligent assisted driving technologies for vehicles, and in particular, to an object detection method and an apparatus.

### BACKGROUND

With the development of society, intelligent vehicles are gradually entering people's daily life. A sensor plays an important role in assisted driving and autonomous driving of an intelligent vehicle. Various sensors mounted on a vehicle, such as a millimeter-wave radar, a laser radar, a camera, and an ultrasonic radar, sense an ambient environment, collect data, identify and track a moving object, identity static scenarios such as a lane line and a sign, and plan a route based on a navigator and map data in a driving process of the vehicle at any time. The sensors can detect a potential danger in advance, and help a driver take a necessary avoidance means in a timely manner or even autonomously take a necessary avoidance means, so that driving safety and comfort of the vehicle are effectively improved.

In a related technology, a plurality of cameras mounted at different positions of a body of a vehicle separately perform shooting, to obtain images of the vehicle from front, rear, left, and right fields of view. Then, these images are stitched to obtain a surround view panoramic image. A driver may view the surround view image on an in-vehicle central display screen to learn about an ambient environment of the vehicle. Object detection is performed on the surround view image through a trained neural network, to determine a position of an object (such as a parking space, a person, an obstacle, and a lane line). A recall rate and accuracy of a detection result are high, so that intelligent assisted driving of the vehicle can be implemented.

A method for recognizing objects by using a plurality of sensors is described in US 2018/165829 A1. The method includes obtaining first sensing data from a first sensor that senses the object, obtaining second sensing data from a second sensor that senses the object, obtaining a first object recognition reliability for the object and a second object recognition reliability for the object respectively, matching object information of the object recognized using the second sensing data to the first sensing data, and storing the matched object information in a database of one of the first sensor and the second sensor.

However, in the detection result obtained through the object detection performed on the surround view image, a confidence of the object is excessively low. Consequently, whether the object is a real object cannot be determined, and an object detection error is easy to occur.

### SUMMARY

The present invention provides an object detection method, an apparatus and a computer-readable storage medium according to the independent claims, to fuse a confidence of an object detected from a single image and a confidence of an object detected from a surround view image, to ensure a trustworthiness level of the detected object and further improve accuracy of object detection.

According to a first aspect, this application provides an object detection method, including:
when a first object and a second object are a same object, obtaining a fusion confidence based on a first confidence and a second confidence, where the first confidence is a trustworthiness level of the first object in a first image, the second confidence is a trustworthiness level of the second object in a second image, the first image is an image from a first image shooting apparatus, the second image is a surround view image obtained based on images from a plurality of image shooting apparatuses, and the plurality of image shooting apparatuses include the first image shooting apparatus; and outputting an object detection result based on the fusion confidence.

In this application, a confidence of an object detected from a single fisheye image and a confidence of an object detected from a surround view image are fused, to ensure a trustworthiness level of the detected object and further improve accuracy of object detection.

The obtaining a fusion confidence based on a first confidence and a second confidence includes: when the first confidence is greater than a first threshold, and the second confidence is greater than a second threshold, setting a first weight corresponding to the first confidence and setting a second weight corresponding to the second confidence, and obtaining two values by: weighting the first confidence by using the first weight and weighting the second confidence by using the second weight.

The fusion confidence is determined by summing the two values obtained after weighting.

In a possible implementation, the obtaining a fusion confidence based on a first confidence and a second confidence further includes: When the first confidence is less than or equal to the first threshold, and the second confidence is greater than the second threshold, determining that the fusion confidence is the second confidence.

In a possible implementation, the outputting an object detection result based on the fusion confidence includes: determining that the fusion confidence is greater than a fourth threshold; and outputting positioning information of the second object detected in the second image.

In this implementation, the positioning information of the second object detected in the second image is input based on the fusion confidence, to improve accuracy of object detection.

In a possible implementation, the obtaining a fusion confidence based on a first confidence and a second confidence includes: when the first confidence is greater than a first threshold, and the second confidence is less than or equal to a second threshold, determining that the fusion confidence is the first confidence.

In a possible implementation, the outputting an object detection result based on the fusion confidence includes: determining that the fusion confidence is greater than a fourth threshold; and outputting positioning information of the first object detected in the first image.

In this implementation, the positioning information of the first object detected in the first image is input based on the fusion confidence, to improve accuracy of object detection.

Whether the first object and the second object are the same object is determined based on the image coincidence degree of the first object and the second object, to improve accuracy of object detection.

According to a second aspect, this application provides an object detection apparatus, including:
a processing module, configured to obtain a fusion confidence based on a first confidence and a second confidence when a first object and a second object are a same object, where the first confidence is a trustworthiness level of the first object in a first image, the second confidence is a trustworthiness level of the second object in a second image, the first image is an image from a first image shooting apparatus, the second image is a surround view image obtained based on images from a plurality of image shooting apparatuses, and the plurality of image shooting apparatuses include the first image shooting apparatus; and an interface module, configured to output an object detection result based on the fusion confidence.

The processing module is configured to: when the first confidence is greater than a first threshold, and the second confidence is greater than a second threshold, set a first weight corresponding to the first confidence and set a second weight corresponding to the second confidence and obtain two values by: weighting the first confidence by using the first weight and weighting the second confidence by using the second weight. The processing module is further configured to: determine, based on an image coincidence degree of the first object and the second object, whether the first object and the second object are a same object; and when the image coincidence degree of the first object and the second object is greater than a fourth threshold, determine that the first object and the second object are the same object. The processing module is further configured to: determine, obtain the first image from the first image shooting apparatus; and stitch the images from the plurality of image shooting apparatuses to obtain the second image.

The processing module is configured to determine the fusion confidence by summing the two values obtained after weighting.

In a possible implementation, the processing module is further configured to: When the first confidence is less than or equal to the first threshold, and the second confidence is greater than the second threshold, determine that the fusion confidence is the second confidence.

In a possible implementation, the processing module is configured to: determine that the fusion confidence is greater than a fourth threshold; and the interface module is configured to output positioning information of the second object detected in the second image.

According to a thrid aspect, this application provides a computer program. When the computer program is executed by a computer, the method according to any implementation of the first aspect is implemented.

### BRIEF DESCRIPTION OF DRAWINGS

FIG. 1 is a schematic diagram of an object detection system to which an object detection method is applicable according to this application;
FIG. 2 is a schematic diagram of a line-of-sight direction of an image shooting apparatus according to this application;
FIG. 3 is a flowchart of an embodiment of an object detection method according to this application;
FIG. 4A and FIG. 4B are respectively a schematic diagram of a fisheye image and a schematic diagram of a corrected image;
FIG. 5 is a schematic diagram of a detection result of a first image according to this application;
FIG. 6 is a schematic diagram of a detection result of a second image according to this application;
FIG. 7 is a schematic diagram of another detection result of a first image according to this application;
FIG. 8 is a schematic diagram of a detection result of a first image and a detection result of a second image according to this application;
FIG. 9 is a schematic diagram of an overlapping area of two BBs according to this application;
FIG. 10 is a schematic diagram of a total area of two BBs according to this application;
FIG. 11 is a flowchart of fusing confidences of a first image and a second image according to this application;
FIG. 12 is a schematic diagram of a structure of an embodiment of an object detection apparatus according to this application; and
FIG. 13 is a schematic block diagram of an object detection device according to this application.

### DESCRIPTION OF EMBODIMENTS

To make the objectives, technical solutions, and advantages of this application clearer, the following clearly and completely describes the technical solutions in this application with reference to the accompanying drawings in this application. It is clear that the described embodiments are merely a part rather than all of the embodiments of this application. All other embodiments obtained by a person of ordinary skill in the art based on the embodiments of this application without creative efforts shall fall within the protection scope of this application.

In the embodiments, claims, and the accompanying drawings of this specification in this application, the terms "first", "second", and the like are only used for distinction and description, and cannot be understood as indicating or implying relative importance or a sequence. Moreover, the terms "include", "have", and any other variants thereof are intended to cover a non-exclusive inclusion, for example, including a series of steps or units. A method, system, product, or device does not need to be limited to those explicitly listed steps or units, but may include other steps or units that are not explicitly listed or that are inherent to the process, method, product, or device.

It should be understood that, in this application, "at least one" means one or more, and "a plurality of" means two or more. The term "and/or" is used to describe an association relationship between associated objects, and represents that three relationships may exist. For example, "A and/or B" may represent the following three cases: Only A exists, only B exists, and both A and B exist, where A and B may be singular or plural. The character "/" usually represents an "or" relationship between the associated objects. "At least one of the following items (pieces)" or a similar expression thereof indicates any combination of these items, including a single item (piece) or any combination of a plurality of items (pieces). For example, at least one of a, b, or c may represent: a, b, c, "a and b", "a and c", "b and c", or "a, b, and c", where a, b, and c may be singular or plural.

The following describes some terms involved in this application, and shows meanings having a feature of well-known terms.

Fisheye image: The fisheye image is a three-dimensional image that is less affected by an environment and that can effectively show a spatial object and a ground object. The fisheye image is an image shot by a fisheye lens. The fisheye lens is a lens with a focal length less than or equal to 16 mm and a field of view close to or equal to 180°, and is an extreme wide-angle lens. To maximize the lens' field of view of shooting, a front lens of the fisheye lens has a short diameter and parabolically protrudes towards the front of the fisheye lens, which is similar to an eye of a fish, so that the lens is named "fisheye lens".

Stitching: Image stitching is performed, by using an image stitching algorithm, on images from a plurality of image shooting apparatuses based on a correspondence between an image in an overlapping region and images that are included in the images from the plurality of image shooting apparatuses and that correspond to the overlapping region.

Confidence: The confidence describes a trustworthiness level of a detection result during object detection, and indicates a trustworthiness level of a detected object. For example, a value of the confidence ranges from 0 to 1.

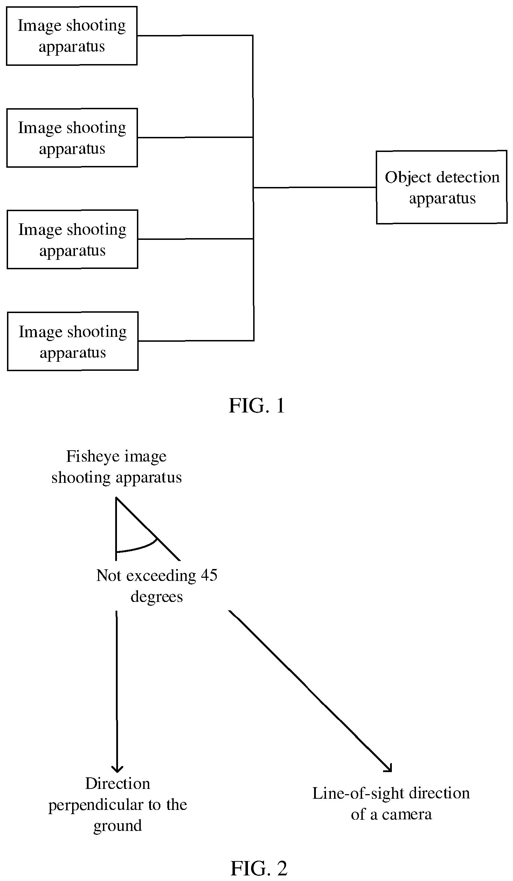

FIG. 1 is a schematic diagram of an object detection system to which an object detection method is applicable according to this inention. As shown in FIG. 1. the object detection system may include a plurality of image shooting apparatuses and an object detection apparatus. The plurality of image shooting apparatuses may be distributed and mounted around a body of a vehicle. Respective image shooting coverage regions of two adjacent image shooting apparatuses partially overlap, to facilitate surround view image stitching described below. The object detection apparatus may be independently disposed, may be integrated into a control apparatus, or may be implemented by using software or a combination of software and hardware. This is not specifically limited. Optionally, the foregoing object detection system may be applied to an advanced driver assistance system (Advanced Driver Assistance System, ADAS).

For example, the plurality of image shooting apparatuses may use four fisheye image shooting apparatuses mounted on the body of the vehicle. A front fisheye image shooting apparatus may be mounted at a middle top position of a logo of the vehicle. A rear fisheye image shooting apparatus may be mounted at a middle top position of a license plate of the vehicle. It needs to be ensured that the front image shooting apparatus and the rear image shooting apparatus are located on a central axis of the vehicle (where an error needs to be within a range between -5 mm to +5 mm). A left fisheye image shooting apparatus and a right fisheye image shooting apparatus may be separately mounted under a left rearview mirror and a right rearview mirror of the vehicle. It needs to be ensured that the left image shooting apparatus and the right image shooting apparatus are symmetrical with respect to the central axis of the vehicle, and distances between the two fisheye image shooting apparatuses and the front of the vehicle and distances between the two fisheye image shooting apparatuses and a baseline are consistent. Based on a requirement for obtaining a field of view, the four fisheye image shooting apparatuses may be 50 cm higher than the ground, and in particular, the left image shooting apparatus and the right image shooting apparatus need to be kept at the same height. As shown in FIG. 2, an included angle between a line-of-sight direction of the four fisheye image shooting apparatuses and a direction perpendicular to the ground is about 40 degrees to 45 degrees, and does not exceed a maximum of 45 degrees, to ensure that the body of the vehicle can be seen in an image shot by the four fisheye image shooting apparatuses.

The object detection apparatus may perform object detection based on images shot by the plurality of image shooting apparatuses, to understand an ambient environment of the vehicle. An object includes a parking space, a person, an obstacle, a lane line, and the like. For example, object detection is performed by using technologies such as a neural network or computer vision.

It should be noted herein that the system to which the object detection method is applicable in this application is not limited to including the four fisheye image shooting apparatuses, and may include any quantity of image shooting apparatuses of any type, provided that the technical solutions in this application can be implemented. A composition of the system is not limited. In the following embodiments of this application, for ease of description, only a plurality of fisheye image shooting apparatuses are used as an example for description.

The following describes an object detection method provided in this application.

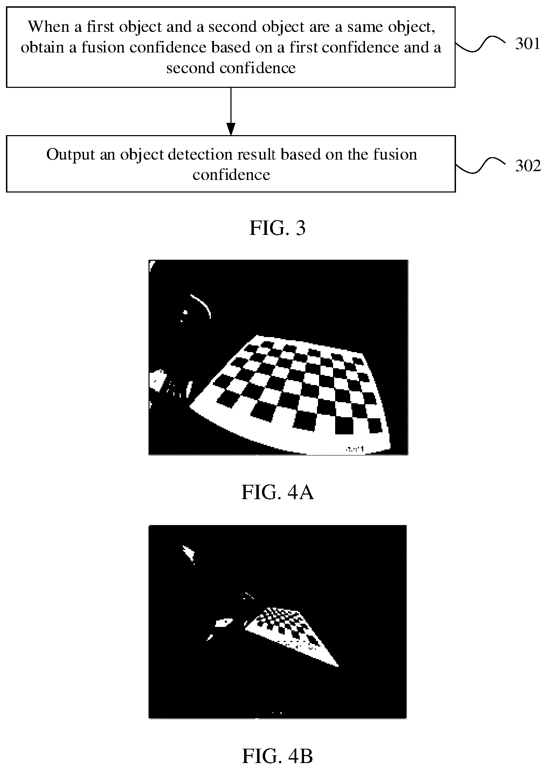

FIG. 3 is a flowchart of an embodiment of an object detection method according to this application. As shown in FIG. 3, the method in this embodiment may be performed by a chip in the foregoing ADAS, and the object detection method may include the following steps.

Step 301: When a first object and a second object are a same object, obtain a fusion confidence based on a first confidence and a second confidence.

The first confidence is a trustworthiness level of the first object in a first image, the second confidence is a trustworthiness level of the second object in a second image, the first image is an image from a first image shooting apparatus, and the second image is a surround view image obtained based on images from a plurality of image shooting apparatuses. Optionally, the plurality of image shooting apparatuses include the first image shooting apparatus. Still optionally, the plurality of image shooting apparatuses do not include the first image shooting apparatus.

In this invention, the first image is an image shot by the first image shooting apparatus. Further, the plurality of image shooting apparatuses may be disposed on a body of a vehicle, but specific positions are not limited.

Specifically, the plurality of image shooting apparatuses are mounted around the body of the vehicle. Image shooting coverage regions of two or more adjacent image shooting apparatuses may partially overlap. For example, for the four fisheye image shooting apparatuses on the body of the vehicle that are described in the foregoing embodiment, each image shooting apparatus may be considered as the first image shooting apparatus. Therefore, the first image may come from one of the four image shooting apparatuses, or may come from a plurality of image shooting apparatuses in the four image shooting apparatuses. If an in-vehicle image shooting apparatus is a fisheye image shooting apparatus, an image obtained through shooting is a fisheye image. Because a field of view of the fisheye image shooting apparatus is large, a large quantity of image features can be shot. Therefore, a three-dimensional fisheye image obtained through shooting can effectively show a feature of a spatial object. However, a distortion phenomenon exists in the fisheye image shooting apparatus, and a longer distance from an imaging center point results in a larger image distortion. The distortion is reflected as a geometric deformation of the object in the fisheye image, for example, stretching and bending.

Therefore, this embodiment of this invention further provides the second image. The second image is a surround view image obtained by stitching the images shot by the plurality of image shooting apparatuses, and the plurality of image shooting apparatuses include the first image shooting apparatus. Image stitching is performed, by using an image stitching algorithm, on top views shot by four image shooting apparatuses based on a correspondence between an image in an overlapping region and images that are included in the images shot by the plurality of image shooting apparatuses from a plurality of angles and that correspond to the overlapping region, to obtain the surround view image. The image stitching may include three main steps: fisheye image distortion correction, top view conversion, and image stitching. In each step, a coordinate conversion relationship between corresponding pixels in an input image and an output image may be obtained. Finally, a pixel correspondence between a single image and the surround view image is obtained. It should be noted that for a stitching technology and generation of the surround view image, refer to the current technology. A specific stitching manner and a specific generation manner of the surround view image are not specifically limited in this application.

It should be further noted that because the plurality of image shooting apparatuses exist, there may be a plurality of first images including the first object in the plurality of images shot by the plurality of image shooting apparatuses. For ease of description, the solutions of this invention relate to obtaining a detection result based on one first image and one second image. However, a person skilled in the art may know that there may be a plurality of first images, that is, there may be at least two first images in the plurality of images shot by the plurality of image shooting apparatuses. Further, in this embodiment of this application, object detection may alternatively be performed based on a plurality of first images and second images. In this scenario, for processing of a plurality of first images, refer to the manner of processing the first image in this embodiment of this application. For example, the plurality of first images correspond to a plurality of first confidences. In the following descriptions, processing of the first confidence may be extended to processing of at least one of a plurality of first confidences.

Optionally, the first image is a fisheye image. Further, the first image may be obtained after processing is performed on a fisheye image obtained from the image shooting apparatus. For example, to correct a geometric deformation of an object in the image, the fisheye image shooting apparatus may be calibrated, to obtain an intrinsic parameter and a distortion coefficient of the fisheye image shooting apparatus. Then, with reference to an extrinsic parameter relative to a calibration object, the fisheye image may be corrected based on the obtained parameter and a fisheye distortion model to obtain a corrected image, and the corrected image is used as the first image. For a specific processing manner, refer to an image processing manner in the current technology. The foregoing descriptions of obtaining the first image merely show a possible image processing means. This is not specifically limited in this embodiment of this application.

In this application, the first confidence is a trustworthiness level of the first object detected in the first image, and the second confidence is a trustworthiness level of the second object detected in the second image.

For example, object detection may be performed by using technologies such as a neural network or computer vision. Major processing manners in a process of performing object detection based on the computer vision are as follows.

Image grayscale processing: An image is usually stored in a red green blue (red green blue, RGB) format. In an RGB model of an image, when values of red, green, and blue color channels are the same, the value is called a grayscale value. Therefore, each pixel in a grayscale image needs only one byte to store the grayscale value (also referred to as an intensity value or a luminance value). The grayscale value ranges from 0 to 255. The image grayscale processing can be used as a preprocessing step of image processing, to prepare for subsequent operations such as image segmentation, image recognition, and image analysis.

Gaussian filtering: The Gaussian filtering is linear smooth filtering that is used to eliminate Gaussian noise and is widely used in a denoising process of image processing. Generally speaking, Gaussian filtering is a process of performing weighted averaging on an entire image. A value of each pixel is obtained by performing weighted averaging on the pixel value and other pixel values in a neighborhood of the pixel. A specific operation of Gaussian filtering is to scan each pixel in an image by using a template (or referred to as a convolution or a mask), and replace a value of a center pixel of the template with a weighted average grayscale value, determined based on the template, of pixels in a neighborhood of the center pixel.

Edge detection: An edge is a set of pixels around which pixel grayscale changes sharply, and is the most basic feature of an image. Edge detection is to extract features of discontinuous parts in an image and determine a region based on a closed edge.

Hough transformation: A basic principle of Hough transformation is to use duality of a point and a line to transform a given curve expressed by a curve expression in an original image space into a point in a parameter space. In this way, a problem of detecting the given curve in the original image is converted into a problem of searching for a peak value in the parameter space. That is, detection of an overall feature is converted into detection of a partial feature. For example, the curve is a straight line, an ellipse, a circle, and an arc.

Performing object detection based on computer vision includes: first performing grayscale processing on an input image to change the image into a grayscale image, performing denoising on the image through Gaussian filtering, then extracting discontinuous features in the image by using an edge detection model, and finally converting an overall feature into a partial feature through Hough transformation. According to the object detection method, a detection result similar to that of a neural network may be obtained. For example, a frame is drawn around a detected object to obtain a confidence of the object.

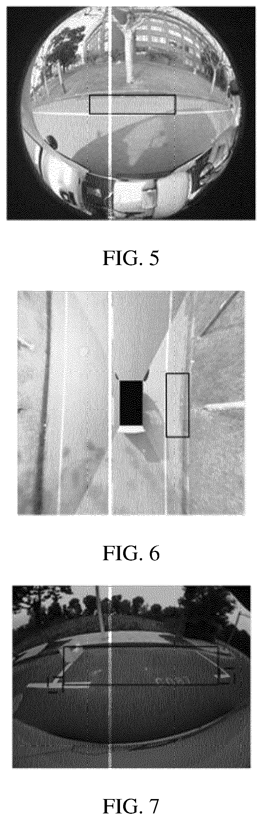

FIG. 4A and FIG. 4B are respectively a schematic diagram of a fisheye image and a schematic diagram of a corrected image. Object detection may be implemented on an image by using, for example, a neural network, and a detection result may be presented in a form of an image. For example, if whether a parking space exists in an image shot by an in-vehicle image shooting apparatus needs to be detected, a region that is detected as the parking space is circled in a form of a frame, a highlight, or the like in an output image obtained by using the neural network. For example, FIG. 5 is a schematic diagram of a detection result of a parking space detected in the first image (a single fisheye image) by using a neural network, and FIG. 6 is a schematic diagram of a detection result of a parking space detected in the second image (a surround view image) by using a neural network. A box in the figure is the detected parking space. In addition, the object detection may further provide descriptions of a trustworthiness level of the detection result, that is, a confidence of the object, and a value of the confidence ranges from 0 to 1. For example, object (parking space) detection is performed on the first image by using, for example, a neural network technology, to detect two parking spaces, where a confidence of one parking space is 0.3, and a confidence of the other parking space is 0.6. It indicates that the latter is more likely to be a parking space than the former in a real condition, and for the former, there is a possibility of falsely detecting another object as a parking space.

It should be noted that, in addition to the object detection method based on the neutral network and the object detection method based on the computer vision, another object detection method may be used to detect the first object and the second object in this application. This is not specifically limited.

In this application, a plurality of methods may be used to determine whether the first object and the second object are a same object.

Whether the first object and the second object are a same object is determined based on an image coincidence degree of the first object and the second object, and when the image coincidence degree of the first object and the second object is greater than a third threshold, it is determined that the first object and the second object are the same object. The image coincidence degree of the first object and the second object may be obtained based on a pixel correspondence between the first image and the second image.

In another possible implementation, determining is performed based on a pixel distance between a center point of the first object and a center point of the second object. Specifically, the center point of the second object is obtained after the second object is converted into an object in the second image based on the pixel correspondence, then the pixel distance between this center point and the center point of the second object is calculated, and the pixel distance is compared with a set pixel distance threshold to obtain a determining result of whether the first object and the second object are the same object. For example, if a resolution of the second image is 600×600, the pixel distance threshold is 30, the center point of the first object is (400. 500), and the center point of the second object is (420, 520), it can be learned through calculation that the pixel distance between the two center points is 28. Because 28 is less than 30, it can be determined that the first object and the second object are the same object.

It should be noted that the foregoing two methods are examples for description, and a method for determining whether the first object and the second object are the same object is not specifically limited in this application.

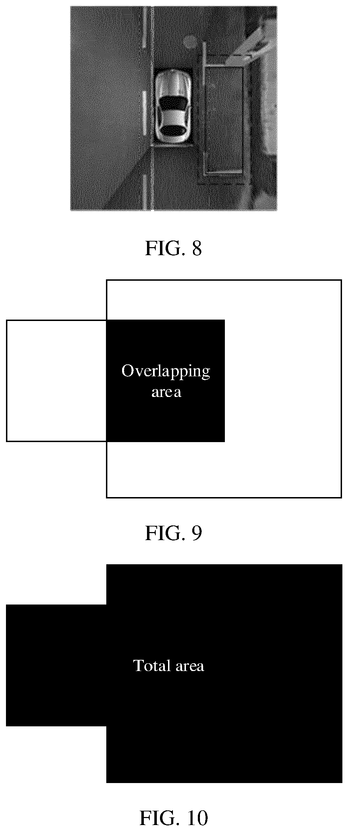

For example, FIG. 7 is a schematic diagram of a detection result of a parking space detected in the first image (a single fisheye image), where a parking space line mark for calibrating a parking space is in a dashed-line box. When the parking space line mark in the dashed-line box is detected, it may be considered that a parking space exists there. A solid-line box is a bounding box (Bounding Box, BB) of a schematic parking space drawn based on the detected parking space line mark. FIG. 8 is a schematic diagram of a detection result of a parking space detected in the second image and a detection result of a parking space, in the second image (a surround view image), converted based on the pixel correspondence from the parking space detected in the first image (the single fisheye image) in FIG. 7. A dashed-line box represents a BB of the parking space obtained after the parking space detected in the first image is converted, and a solid-line box represents a BB of the parking space detected in the second image. It can be learned from the figure that the solid-line box is completely included in the dashed-line box, which indicates that the two BBs correspond to a same parking space.

In this application, a threshold (the third threshold, for example, 0.7) of a coincidence degree of the two BBs is set. The coincidence degree may be represented by an intersection over union (Intersection Over Union, IOU).

FIG. 9 shows an overlapping area of the two BBs, and FIG. 10 shows a total area of the two BBs. IOU=overlapping area/total area. When the IOU is greater than the third threshold, it indicates that the two BBs correspond to a same parking space. In this case, the fusion confidence may be obtained based on the first confidence and the second confidence. However, if the IOU is less than or equal to the third threshold, it indicates that the two BBs may not correspond to a same parking space, and there is no need to fuse confidences of the two BBs. In this case, the fusion confidence does not need to be obtained, and object detection is terminated.

Step 302: Output an object detection result based on the fusion confidence.

In this application, the fusion confidence may be obtained based on a comparison result between the first confidence and a first threshold, and/or a comparison result between the second confidence and a second threshold. The first threshold, the second threshold, the third threshold, and a fourth threshold mentioned below may be determined based on object detection precision, accuracy, and/or a recall rate, or may be learned through training, or may be preconfigured or defined values. A manner of obtaining various thresholds is not specifically limited in this application.

In this application, the outputting an object detection result based on the fusion confidence includes at least one of the following several cases:
(1) When the first confidence is greater than the first threshold, and the second confidence is greater than the second threshold, the fusion confidence is determined based on a preset weight value. If it is determined that the fusion confidence is greater than the fourth threshold, positioning information of the second object detected in the second image is output. In an optional implementation, in a scenario in which a plurality of first images exist (that is, each of the plurality of first images includes the first object), there are a plurality of first confidences corresponding to the plurality of first images, and the foregoing condition may be replaced with "when at least one of the plurality of first confidences is greater than the first threshold or all of the plurality of first confidences are greater than the first threshold, and the second confidence is greater than the second threshold". It should be noted herein that explanations of a plurality of first images in the optional implementations below are the same as those of the plurality of first images mentioned herein, and both mean that the plurality of first images include a same first object.
   A first weight and a second weight are provided, where the first weight corresponds to the first confidence, and the second weight corresponds to the second confidence. Further, the first weight and the second weight are preset. Specifically, the first confidence is weighted by using the first weight, the second confidence is weighted by using the second weight, and the fusion confidence is obtained after two values obtained after weighting are summed.
   Based on results of object detection respectively performed on the first image and the second image, the first weight is set corresponding to the first confidence, the second weight is set corresponding to the second confidence, the first confidence is weighted by using the first weight, the second confidence is weighted by using the second weight, and the fusion confidence is obtained after two values obtained after weighting are summed. In this case, the first confidence of the first object detected in the first image and the second confidence of the second object detected in the second image are both higher than respective thresholds. It indicates that there is a high possibility that both the first object detected in the first image and the second object detected in the second image are real objects. To improve a confidence of a final detection result, the fusion confidence is obtained based on the detection result of the second image in combination with the detection result of the first image. In this way, the confidence of the detection result of the second image may be improved, and finally, the trustworthiness level of the object may be improved. If the fusion confidence is greater than the fourth threshold, the second object detected in the second image may be directly used as a finally detected object, and the positioning information of the object is output, where the positioning information is used to present an ambient environment of a vehicle.
(2) When the first confidence is less than or equal to the first threshold, and the second confidence is greater than the second threshold, it is determined that the fusion confidence is the second confidence. If it is determined that the fusion confidence is greater than the fourth threshold, positioning information of the second object detected in the second image is output. In an optional implementation, in a scenario in which a plurality of first images exist, there are a plurality of first confidences corresponding to the plurality of first images, and the foregoing condition may be replaced with "when all the plurality of first confidences are less than or equal to the first threshold, and the second confidence is greater than the second threshold".
   In this case, the first confidence of the first object detected in the first image is less than or equal to the first threshold, and the second confidence of the second object detected in the second image is greater than the second threshold. It indicates that there is a high possibility that the first object detected in the first image may be falsely detected, and there is a high possibility that the second object detected in the second image is a real object. Therefore, the second confidence of the second object is used as the fusion confidence. If the fusion confidence is greater than the fourth threshold, the second object detected in the second image may be used as a finally detected object, and the positioning information of the object is output, where the positioning information is used to present an ambient environment of a vehicle.
(3) When the first confidence is greater than the first threshold, and the second confidence is less than or equal to the second threshold, it is determined that the fusion confidence is the first confidence. If it is determined that the fusion confidence is greater than the fourth threshold, positioning information of the first object detected in the first image is output. In an optional implementation, in a scenario in which a plurality of first images exist, there are a plurality of first confidences corresponding to the plurality of first images, and the foregoing feature may be replaced with "when at least one of the plurality of first confidences is greater than the first threshold or all of the plurality of first confidences are greater than the first threshold, and the second confidence is less than or equal to the second threshold, it is determined that the fusion confidence is one of the plurality of first confidences". For example, the fusion confidence may be a first confidence with a largest value in the plurality of first confidences.
   In this case, the first confidence of the first object detected in the first image is greater than the first threshold, and the second confidence of the second object detected in the second image is less than or equal to the second threshold. It indicates that there is a high possibility that the first object detected in the first image is a real object, and there is a high possibility that the second object detected in the second image may be falsely detected. Therefore, the first confidence of the first object is used as the fusion confidence. If the fusion confidence is greater than the fourth threshold, the first object detected in the first image may be used as a finally detected object, and the positioning information of the object is output, where the positioning information is used to present an ambient environment of a vehicle.
(4) When the first confidence is less than or equal to the first threshold, and the second confidence is less than or equal to the second threshold, it is determined that the fusion confidence fails to be obtained, and prompt information indicating that object detection fails is output. Optionally, in a scenario in which a plurality of first images exist, there are a plurality of first confidences corresponding to the plurality of first images, and the foregoing condition may be replaced with "when all the plurality of first confidences are less than or equal to the first threshold, and the second confidence is less than or equal to the second threshold".

In this case, the first confidence of the first object detected in the first image is less than or equal to the first threshold, and the second confidence of the second object detected in the second image is less than or equal to the second threshold. It indicates that there is a high probability that both the first object detected in the first image and the second object detected in the second image may be falsely detected. In this case, it may be determined that the fusion confidence fails to be obtained, and the prompt information indicating that object detection fails is directly output.

It should be noted that in the four cases in which the object detection result is output based on the fusion confidence, a condition of each case is an example for description. For a special case in which the first confidence is equal to the first threshold and a special case in which the second confidence is equal to the second threshold, a case into which the special case is to be classified may be determined based on specific range settings of the first threshold and the second threshold.

For example, the condition of the foregoing case (1) may alternatively be that the first confidence is greater than or equal to the first threshold, and the second confidence is greater than or equal to the second threshold; the condition of the case (2) may alternatively be that the first confidence is less than the first threshold, and the second confidence is greater than or equal to the second threshold; the condition of the case (3) may alternatively be that the first confidence is greater than or equal to the first threshold, and the second confidence is less than the second threshold; the condition of the case (4) may alternatively be that the first confidence is less than the first threshold, and the second confidence is less than the second threshold.

For another example, the condition of the foregoing case (1) may alternatively be that the first confidence is greater than the first threshold, and the second confidence is greater than or equal to the second threshold; the condition of the case (2) may alternatively be that the first confidence is less than or equal to the first threshold, and the second confidence is greater than or equal to the second threshold; the condition of the case (3) may alternatively be that the first confidence is greater than the first threshold, and the second confidence is less than the second threshold; the condition of the case (4) may alternatively be that the first confidence is less than or equal to the first threshold, and the second confidence is less than the second threshold.

For another example, the condition of the foregoing case (1) may alternatively be that the first confidence is greater than or equal to the first threshold, and the second confidence is greater than the second threshold; the condition of the case (2) may alternatively be that the first confidence is less than the first threshold, and the second confidence is greater than the second threshold; the condition of the case (3) may alternatively be that the first confidence is greater than or equal to the first threshold, and the second confidence is less than or equal to the second threshold; the condition of the case (4) may alternatively be that the first confidence is less than the first threshold, and the second confidence is less than or equal to the second threshold.

In this invention, a confidence of an object detected from a single image and a confidence of an object detected from a surround view image are fused, to ensure a trustworthiness level of the detected object and further improve accuracy of object detection.

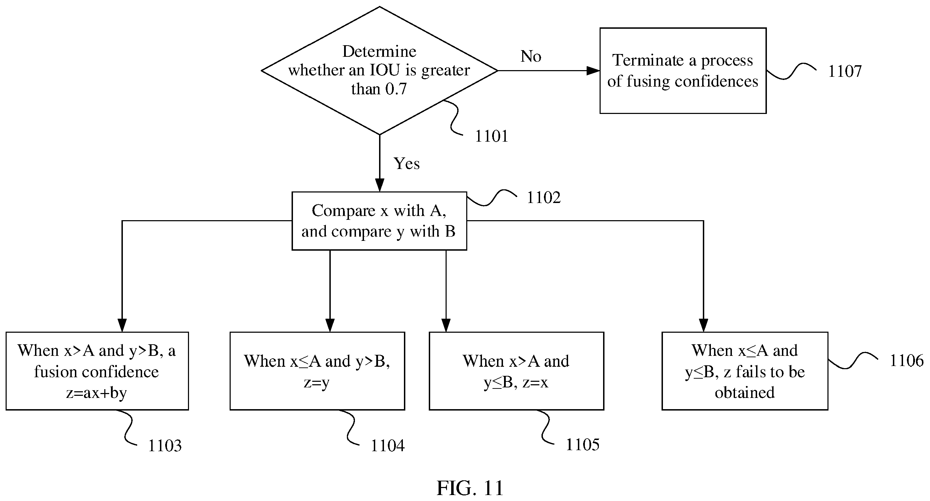

For example, it is assumed that the first confidence is x, the second confidence is y, the first threshold A=0.6, the second threshold B=0.4, the weight a of x=0.2, the weight b of y=0.8, the third threshold is 0.5, and the third threshold is 0.7. FIG. 11 shows a process in which a confidence of a first image and a confidence of a second image are fused in an object detection method. The process includes the following steps:
Step 1101: Determine whether an IOU is greater than 0.7.

The IOU is an image coincidence degree of an object detected in the first image and an object detected in the second image that is obtained based on a pixel correspondence between the first image and the second image.

If IOU>0.7, step 1102 is performed. If IOU≤0.7, step 1107 is performed to terminate the process of fusing the confidences.

Step 1102: Compare x with A, and compare y with B.

Step 1103: When x>A and y>B, a fusion confidence z=ax+by.

For example, x=0.8, y=0.5, and z=0.2×0.8+0.8×0.5=0.56. z>0.5, and positioning information of the object detected in the second image is output.

Step 1104: When x≤A, and y>B, z=y.

For example, x=0.6, y=0.5, and z=0.5. The positioning information of the object detected in the second image is output.

Step 1105: When x>A, and y≤B, z=x.

For example, x=0.8, y=0.3, and z=0.8. Positioning information of the object detected in the first image is output.

Step 1106: When x≤A and y≤B, z fails to be obtained.

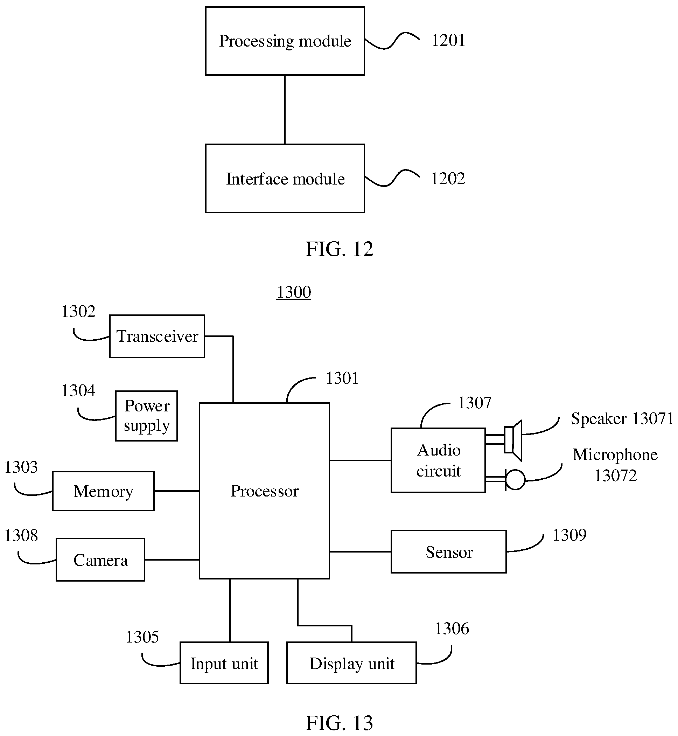

FIG. 12 is a schematic diagram of a structure of an embodiment of an object detection apparatus according to this application. As shown in FIG. 12, the object detection apparatus in this embodiment may be independently disposed, may be integrated into a control apparatus, or may be implemented by using software or a combination of software and hardware. For example, the object detection apparatus may be used in an ADAS, and may be specifically implemented as a chip or an integrated circuit in the ADAS, or may be implemented independently of the ADAS. For another example, the object detection apparatus may be used in a control entity of a vehicle, and may be specifically integrated in the control entity or independent of the control entity.

The apparatus includes: a processing module 1201 and an interface module 1202. The processing module 1201 is configured to obtain a fusion confidence based on a first confidence and a second confidence when a first object and a second object are a same object. The first confidence is a trustworthiness level of the first object in a first image, the second confidence is a trustworthiness level of the second object in a second image, the first image is an image from a first image shooting apparatus, the second image is a surround view image obtained based on images from a plurality of image shooting apparatuses, and the plurality of image shooting apparatuses include the first image shooting apparatus. The interface module 1202 is configured to output an object detection result based on the fusion confidence.

The processing module 1201 is configured to: when the first confidence is greater than a first threshold, and the second confidence is greater than a second threshold, determine the fusion confidence based on a preset weight value; and/or when the first confidence is less than or equal to the first threshold, and the second confidence is greater than the second threshold, determine that the fusion confidence is the second confidence.

In a possible implementation, the processing module 1201 is configured to determine that the fusion confidence is greater than a fourth threshold; the interface module 1202 is configured to output positioning information of the second object detected in the second image.

In a possible implementation, the processing module 1201 is configured to: when the first confidence is greater than a first threshold, and the second confidence is less than or equal to a second threshold, determine that the fusion confidence is the first confidence.

In a possible implementation, the processing module 1201 is configured to determine that the fusion confidence is greater than a fourth threshold; the interface module 1202 is configured to output positioning information of the first object detected in the first image.

The processing module 1201 is configured to: determine, based on an image coincidence degree of the first object and the second object, whether the first object and the second object are a same object; and when the image coincidence degree of the first object and the second object is greater than a third threshold, determine that the first object and the second object are the same object.

In a possible implementation, the processing module 1201 is configured to: obtain the first image from the first image shooting apparatus; and stitch the images from the plurality of image shooting apparatuses to obtain the second image.

The apparatus in this embodiment may be used to execute the technical solutions of the method embodiment shown in FIG. 3 or FIG. 11. Implementation principles and technical effects are similar, and details are not described herein again.

In a possible implementation, this application provides a computer-readable storage medium, including a computer program. When the computer program is executed on a computer, the computer is enabled to perform the method in any method embodiment shown in FIG. 3 to FIG. 11.

In a possible implementation, this application provides a computer program. When the computer program is executed by a computer, the method in any method embodiment shown in FIG. 3 to FIG. 11 is implemented.

In a possible implementation, this application provides an apparatus. The apparatus may be independently disposed, may be integrated into a control apparatus, or may be implemented by using software or a combination of software and hardware. For example, the apparatus may be used in an ADAS, and may be specifically implemented as a chip or an integrated circuit in the ADAS, or may be implemented independently of the ADAS. For another example, the apparatus may be used in a control entity of a vehicle, and may be specifically integrated in the control entity or independent of the control entity. The apparatus includes a processor and a memory. The memory is configured to store a computer program, and the processor is configured to invoke and run the computer program stored in the memory, to implement the method in any method embodiment shown in FIG. 3 to FIG. 11.

FIG. 13 is a schematic block diagram of an object detection device according to this application. The object detection device 1300 may be used in an ADAS, or may be a control entity of a vehicle, and includes a processor 1301 and a transceiver 1302.

Optionally, the object detection device 1300 further includes a memory 1303. The processor 1301, the transceiver 1302, and the memory 1303 may communicate with each other through an internal connection path, to transfer a control signal and/or a data signal.

The memory 1303 is configured to store a computer program. The processor 1301 is configured to execute the computer program stored in the memory 1303, to implement functions of the object detection device 1300 in the foregoing apparatus embodiment.

Specifically, the processor 1301 may be configured to perform an operation and/or processing performed by the fusion module 1202 and the output module 1203 described in the apparatus embodiment (for example, the embodiment shown in FIG. 12), and the transceiver 1302 is configured to perform an operation and/or processing performed by the obtaining module 1201.

Optionally, the memory 1303 may be integrated into the processor 1301, or may be independent of the processor 1301.

Optionally, the object detection device 1300 may further include a power supply 1304 that is configured to supply power to various components or circuits.

In addition, to improve functions, the object detection device 1300 may further include one or more of an input unit 1305, a display unit 1306 (which may also be considered as an output unit), an audio circuit 1307, a camera 1308, and a sensor 1309. The audio circuit may further include a speaker 13071, a microphone 13072, and the like. Details are not described herein.

The processor and the memory mentioned in the foregoing embodiments may be located on an integrated circuit or a chip, and the processor has an image processing capability. In an implementation process, steps in the foregoing method embodiments can be completed by using a hardware integrated logical circuit in the processor, or by using instructions in a form of software. The processor may be a general-purpose processor or a digital signal processor (digital signal processor, DSP). The integrated circuit or chip may be an application-specific integrated circuit (application-specific integrated circuit, ASIC), a field programmable gate array (field programmable gate array, FPGA) or another programmable logic device, a discrete gate or transistor logic device, or a discrete hardware component. The general-purpose processor may be a microprocessor, or the processor may be any conventional processor or the like. Steps in the methods disclosed in the embodiments of this application may be directly performed and accomplished by a hardware coding processor, or may be performed and accomplished by a combination of hardware and software modules in the coding processor. The software module may be located in a mature storage medium in the art, for example, a random access memory, a flash memory, a read-only memory, a programmable read-only memory, an electrically erasable programmable memory, or a register. The storage medium is located in the memory, and the processor reads information in the memory and completes the steps in the foregoing methods in combination with hardware of the processor.

The memory in the foregoing embodiments may be a volatile memory or a non-volatile memory, or may include both a volatile memory and a non-volatile memory. The non-volatile memory may be a read-only memory (read-only memory, ROM), a programmable read-only memory (programmable ROM, PROM), an erasable programmable read-only memory (erasable PROM, EPROM), an electrically erasable programmable read-only memory (electrically EPROM, EEPROM), or a flash memory. The volatile memory may be a random access memory (random access memory, RAM) that is used as an external buffer. Through example but not limitative description, many forms of RAMs may be used, for example, a static random access memory (static RAM, SRAM), a dynamic random access memory (dynamic RAM, DRAM), a synchronous dynamic random access memory (synchronous DRAM, SDRAM), a double data rate synchronous dynamic random access memory (double data rate SDRAM, DDR SDRAM), an enhanced synchronous dynamic random access memory (enhanced SDRAM, ESDRAM), a synchlink dynamic random access memory (synchlink DRAM, SLDRAM), and a direct rambus random access memory (direct rambus RAM, DR RAM). It should be noted that the memories in the systems and methods described in this specification include but are not limited to these memories and any memory of another suitable type.

A person of ordinary skill in the art may be aware that, in combination with units and algorithm steps of the examples described in the embodiments disclosed in this specification, this application can be implemented by electronic hardware or a combination of computer software and electronic hardware. Whether the functions are performed by hardware or software depends on particular applications and design constraints of the technical solutions.

It may be clearly understood by a person skilled in the art that, for the purpose of convenient and brief description, for a detailed working process of the foregoing system, apparatus, and unit, refer to a corresponding process in the foregoing method embodiments. Details are not described herein again.

In the several embodiments provided in this application, it should be understood that the disclosed system, apparatus, and method may be implemented in another manner. For example, the described apparatus embodiment is merely an example. For example, division into units is merely logical function division and may be other division during actual implementation. For example, a plurality of units or components may be combined or integrated into another system, or some features may be ignored or not performed. In addition, the displayed or discussed mutual couplings or direct couplings or communication connections may be implemented through some interfaces. The indirect couplings or communication connections between the apparatuses or units may be implemented in electrical, mechanical, or other forms.

The units described as separate parts may or may not be physically separate, and parts displayed as units may or may not be physical units, and may be located at one position, or may be distributed on a plurality of network units. Some or all of the units may be selected based on actual requirements to achieve the objectives of the solutions in the embodiments.

In addition, function units in the embodiments of this application may be integrated into one processing unit, or each of the units may exist alone physically, or two or more units may be integrated into one unit.

When the functions are implemented in a form of a software function unit and sold or used as an independent product, the functions may be stored in a computer-readable storage medium. Based on such an understanding, the technical solutions of this application essentially, or the part contributing to the current technology, or some of the technical solutions may be implemented in a form of a software product. The computer software product is stored in a storage medium and includes several instructions for instructing a computer device (a personal computer, a server, or a network device) to perform all or some of the steps of the methods described in the embodiments of this application. The foregoing storage medium includes: any medium that can store program code, such as a USB flash drive, a removable hard disk, a read-only memory (read-only memory, ROM), a random access memory (random access memory, RAM), a magnetic disk, or an optical disc.

## Claims

1. An object detection method, comprising:
when a first object and a second object are a same object, obtaining (301) a fusion confidence based on a first confidence and a second confidence, wherein the first confidence is a trustworthiness level of a detection result during object detection of the first object in a first image, the second confidence is a trustworthiness level of a detection result during object detection of the second object in a second image, and the first image is an image from a first image shooting apparatus, and
outputting (302) an object detection result based on the fusion confidence,
wherein the second image is a surround view image obtained based on images from a plurality of image shooting apparatuses distributed and mounted around a body of a vehicle, wherein respective image shooting coverage regions of two adjacent image shooting apparatuses partially overlap and the plurality of image shooting apparatuses comprise the first image shooting apparatus;
wherein the obtaining a fusion confidence based on a first confidence and a second confidence comprises:
when the first confidence is greater than a first threshold, and the second confidence is greater than a second threshold, setting a first weight corresponding to the first confidence and setting a second weight corresponding to the second confidence, obtaining two values by: weighting the first confidence by using the first weight and weighting the second confidence by using the second weight, and determining the fusion confidence by summing the two values obtained after weighting;
wherein the method further comprises
determining, based on an image coincidence degree of the first object and the second object, whether the first object and the second object are a same object;
when the image coincidence degree of the first object and the second object is greater than a third threshold, determining that the first object and the second object are the same object;
obtaining the first image from the first image shooting apparatus; and
stitching the images from the plurality of image shooting apparatuses to obtain the second image.

2. The method according to claim 1, wherein the obtaining a fusion confidence based on a first confidence and a second confidence further comprises:
when the first confidence is less than or equal to the first threshold, and the second confidence is greater than the second threshold, determining that the fusion confidence is the second confidence .

3. The method according to claim 2, wherein the outputting an object detection result based on the fusion confidence comprises:
determining that the fusion confidence is greater than a fourth threshold; and
outputting positioning information of the second object detected in the second image.

4. The method according to claim 1, wherein the obtaining a fusion confidence based on a first confidence and a second confidence comprises:
when the first confidence is greater than a first threshold, and the second confidence is less than or equal to a second threshold, determining that the fusion confidence is the first confidence.

5. The method according to claim 4, wherein the outputting an object detection result based on the fusion confidence comprises:
determining that the fusion confidence is greater than a fourth threshold; and
outputting positioning information of the first object detected in the first image.

6. An object detection apparatus, comprising:
a processing module (1201), configured to obtain a fusion confidence based on a first confidence and a second confidence when a first object and a second object are a same object, wherein the first confidence is a trustworthiness level of a detection result during object detection of the first object in a first image, the second confidence is a trustworthiness level of a detection result during object detection of the second object in a second image, and the first image is an image from a first image shooting apparatus, and
an interface module (1202), configured to output an object detection result based on the fusion confidence;
wherein the second image is a surround view image obtained based on images from a plurality of image shooting apparatuses, and the plurality of image shooting apparatuses comprise the first image shooting apparatus and are distributed and mounted around a body of a vehicle, wherein respective image shooting coverage regions of two adjacent image shooting apparatuses partially overlap;
wherein the processing module (1201) is configured to: when the first confidence is greater than a first threshold, and the second confidence is greater than a second threshold, set a first weight corresponding to the first confidence and set a second weight corresponding to the second confidence; obtain two values by: weighting the first confidence by using the first weight and weighting the second confidence by using the second weight, and determine the fusion confidence by summing the two values obtained after weighting;
wherein the processing module (1201) is configured to: determine, based on an image coincidence degree of the first object and the second object, whether the first object and the second object are a same object; and when the image coincidence degree of the first object and the second object is greater than a third threshold, determine that the first object and the second object are the same object, and
wherein the processing module (1201) is configured to: obtain the first image from the first image shooting apparatus; and stitch the images from the plurality of image shooting apparatuses to obtain the second image..

7. The apparatus according to claim 6, wherein the processing module (1201) is further configured to: when the first confidence is less than or equal to the first threshold, and the second confidence is greater than the second threshold, determine that the fusion confidence is the second confidence.

8. The apparatus according to claim 7, wherein the processing module (1201) is configured to determine that the fusion confidence is greater than a fourth threshold; and
the interface module (1202) is configured to output positioning information of the second object detected in the second image.

9. The apparatus according to claim 6, wherein the processing module (1201) is configured to: when the first confidence is greater than a first threshold, and the second confidence is less than or equal to a second threshold, determine that the fusion confidence is the first confidence.

10. The apparatus according to claim 9, wherein the processing module (1201) is configured to determine that the fusion confidence is greater than a fourth threshold; and
the interface module (1202) is configured to output positioning information of the first object detected in the first image.

11. A computer-readable storage medium, comprising a computer program, wherein when the computer program is executed on a computer, the computer is enabled to perform the method according to any one of claims 1 to 5.

## Patentansprüche

1. Objekterkennungsverfahren, umfassend:
wenn ein erstes Objekt und ein zweites Objekt dasselbe Objekt sind, Erlangen (301) einer Fusionszuverlässigkeit basierend auf einer ersten Zuverlässigkeit und einer zweiten Zuverlässigkeit, wobei die erste Zuverlässigkeit ein Vertrauenswürdigkeitsniveau eines Erkennungsergebnisses während einer Objekterkennung des ersten Objekts in einem ersten Bild ist, die zweite Zuverlässigkeit ein Vertrauenswürdigkeitsniveau eines Erkennungsergebnisses während einer Objekterkennung des zweiten Objekts in einem zweiten Bild ist und das erste Bild ein Bild von einer ersten Bildaufnahmevorrichtung ist und
Ausgeben (302) eines Objekterkennungsergebnisses basierend auf der Fusionszuverlässigkeit,
wobei das zweite Bild ein Rundumsichtbild ist, das basierend auf Bildern aus einer Vielzahl von Bildaufnahmevorrichtungen erlangt wird, die um eine Karosserie eines Fahrzeugs herum verteilt und montiert ist, wobei sich jeweilige Bildaufnahme-Abdeckungsbereiche von zwei benachbarten Bildaufnahmevorrichtungen teilweise überlappen und die Vielzahl von Bildaufnahmevorrichtungen die erste Bildaufnahmevorrichtung umfasst;
wobei das Erlangen einer Fusionszuverlässigkeit basierend auf einer ersten Zuverlässigkeit und einer zweiten Zuverlässigkeit Folgendes umfasst:
wenn die erste Zuverlässigkeit größer als ein erster Schwellenwert ist und die zweite Zuverlässigkeit größer als ein zweiter Schwellenwert ist, Festlegen einer ersten Gewichtung entsprechend der ersten Zuverlässigkeit und Festlegen einer zweiten Gewichtung entsprechend der zweiten Zuverlässigkeit, Erlangen von zwei Werten durch Folgendes: Gewichten der ersten Zuverlässigkeit unter Verwendung der ersten Gewichtung und Gewichten der zweiten Zuverlässigkeit unter Verwendung der zweiten Gewichtung, und Feststellen der Fusionszuverlässigkeit durch Summieren der beiden nach der Gewichtung erlangten Werte;
wobei das Verfahren ferner Folgendes umfasst:
Feststellen, basierend auf einem Bildübereinstimmungsgrad des ersten Objekts und des zweiten Objekts, ob das erste Objekt und das zweite Objekt dasselbe Objekt sind;
wenn der Bildübereinstimmungsgrad des ersten Objekts und des zweiten Objekts größer als ein dritter Schwellenwert ist, Feststellen, dass das erste Objekt und das zweite Objekt dasselbe Objekt sind;
Erlangen des ersten Bilds von der ersten Bildaufnahmevorrichtung; und
Zusammenfügen der Bilder aus der Vielzahl von Bildaufnahmevorrichtungen, um das zweite Bild zu erlangen.

2. Verfahren nach Anspruch 1, wobei das Erlangen einer Fusionszuverlässigkeit basierend auf einer ersten Zuverlässigkeit und einer zweiten Zuverlässigkeit ferner Folgendes umfasst:
wenn die erste Zuverlässigkeit kleiner als oder gleich dem ersten Schwellenwert ist und die zweite Zuverlässigkeit größer als der zweite Schwellenwert ist, Feststellen, dass die Fusionszuverlässigkeit die zweite Zuverlässigkeit ist.

3. Verfahren nach Anspruch 2, wobei das Ausgeben eines Objekterkennungsergebnisses basierend auf der Fusionszuverlässigkeit Folgendes umfasst:
Feststellen, dass die Fusionszuverlässigkeit größer als ein vierter Schwellenwert ist; und
Ausgeben von Positionsinformationen des in dem zweiten Bild erkannten zweiten Objekts.

4. Verfahren nach Anspruch 1, wobei das Erlangen einer Fusionszuverlässigkeit basierend auf einer ersten Zuverlässigkeit und einer zweiten Zuverlässigkeit Folgendes umfasst:
wenn die erste Zuverlässigkeit größer als ein erster Schwellenwert ist und die zweite Zuverlässigkeit kleiner als oder gleich einem zweiten Schwellenwert ist, Feststellen, dass die Fusionszuverlässigkeit die erste Zuverlässigkeit ist.

5. Verfahren nach Anspruch 4, wobei das Ausgeben eines Objekterkennungsergebnisses basierend auf der Fusionszuverlässigkeit Folgendes umfasst:
Feststellen, dass die Fusionszuverlässigkeit größer als ein vierter Schwellenwert ist; und
Ausgeben von Positionsinformationen des in dem ersten Bild erkannten ersten Objekts.

6. Objekterkennungsvorrichtung, umfassend:
ein Verarbeitungsmodul (1201), das dazu konfiguriert ist, eine Fusionszuverlässigkeit basierend auf einer ersten Zuverlässigkeit und einer zweiten Zuverlässigkeit zu erlangen, wenn ein erstes Objekt und ein zweites Objekt ein selbes Objekt sind, wobei die erste Zuverlässigkeit ein Vertrauenswürdigkeitsniveau eines Erkennungsergebnisses während einer Objekterkennung des ersten Objekts in einem ersten Bild ist, die zweite Zuverlässigkeit ein Vertrauenswürdigkeitsniveau eines Erkennungsergebnisses während einer Objekterkennung des zweiten Objekts in einem zweiten Bild ist und das erste Bild ein Bild von einer ersten Bildaufnahmevorrichtung ist, und
ein Schnittstellenmodul (1202), das dazu konfiguriert ist, ein Objekterkennungsergebnis basierend auf der Fusionszuverlässigkeit auszugeben;
wobei das zweite Bild ein Rundumsichtbild ist, das basierend auf Bildern aus einer Vielzahl von Bildaufnahmevorrichtungen erlangt wird, und die Vielzahl von Bildaufnahmevorrichtungen die erste Bildaufnahmevorrichtung umfasst und um eine Karosserie eines Fahrzeugs herum verteilt und montiert ist, wobei sich jeweilige Bildaufnahme-Abdeckungsbereiche von zwei benachbarten Bildaufnahmevorrichtungen teilweise überlappen;
wobei das Verarbeitungsmodul (1201) zu Folgendem konfiguriert ist: wenn die erste Zuverlässigkeit größer als ein erster Schwellenwert ist und die zweite Zuverlässigkeit größer als ein zweiter Schwellenwert ist, Festlegen einer ersten Gewichtung entsprechend der ersten Zuverlässigkeit und Festlegen einer zweiten Gewichtung entsprechend der zweiten Zuverlässigkeit;
Erlangen von zwei Werten durch Folgendes: Gewichten der ersten Zuverlässigkeit unter Verwendung der ersten Gewichtung und Gewichten der zweiten Zuverlässigkeit unter Verwendung der zweiten Gewichtung, und Feststellen der Fusionszuverlässigkeit durch Summieren der beiden nach der Gewichtung erlangten Werte; wobei das Verarbeitungsmodul (1201) zu Folgendem konfiguriert ist: Feststellen, basierend auf einem Bildübereinstimmungsgrad des ersten Objekts und des zweiten Objekts, ob das erste Objekt und das zweite Objekt dasselbe Objekt sind; und wenn der Bildübereinstimmungsgrad des ersten Objekts und des zweiten Objekts größer als ein dritter Schwellenwert ist, Feststellen, dass das erste Objekt und das zweite Objekt dasselbe Objekt sind, und
wobei das Verarbeitungsmodul (1201) zu Folgendem konfiguriert ist: Erlangen des ersten Bilds von der ersten Bildaufnahmevorrichtung; und Zusammenfügen der Bilder aus der Vielzahl von Bildaufnahmevorrichtungen, um das zweite Bild zu erlangen.

7. Vorrichtung nach Anspruch 6, wobei das Verarbeitungsmodul (1201) ferner zu Folgendem konfiguriert ist: wenn die erste Zuverlässigkeit kleiner als oder gleich dem ersten Schwellenwert ist und die zweite Zuverlässigkeit größer als der zweite Schwellenwert ist, Feststellen, dass die Fusionszuverlässigkeit die zweite Zuverlässigkeit ist.

8. Vorrichtung nach Anspruch 7, wobei das Verarbeitungsmodul (1201) dazu konfiguriert ist, festzustellen, dass die Fusionszuverlässigkeit größer als ein vierter Schwellenwert ist; und
das Schnittstellenmodul (1202) dazu konfiguriert ist, Positionsinformationen des in dem zweiten Bild erkannten zweiten Objekts auszugeben.

9. Vorrichtung nach Anspruch 6, wobei das Verarbeitungsmodul (1201) ferner zu Folgendem konfiguriert ist: wenn die erste Zuverlässigkeit größer als ein erster Schwellenwert ist und die zweite Zuverlässigkeit kleiner als oder gleich einem zweiten Schwellenwert ist, Feststellen, dass die Fusionszuverlässigkeit die erste Zuverlässigkeit ist.

10. Vorrichtung nach Anspruch 9, wobei das Verarbeitungsmodul (1201) dazu konfiguriert ist, festzustellen, dass die Fusionszuverlässigkeit größer als ein vierter Schwellenwert ist; und
das Schnittstellenmodul (1202) dazu konfiguriert ist, Positionsinformationen des in dem ersten Bild erkannten ersten Objekts auszugeben.

11. Computerlesbares Speichermedium, umfassend ein Computerprogramm, wobei, wenn das Computerprogramm auf einem Computer ausgeführt wird, der Computer in die Lage versetzt wird, das Verfahren nach einem der Ansprüche 1 bis 5 durchzuführen.

## Revendications

1. Procédé de détection d'objets, comprenant :
lorsqu'un premier objet et un second objet sont un même objet, l'obtention (301) d'une confiance de fusion basée sur une première confiance et une seconde confiance, dans lequel la première confiance est un niveau de fiabilité d'un résultat de détection pendant la détection d'objet du premier objet dans une première image, la seconde confiance est un niveau de fiabilité d'un résultat de détection pendant la détection d'objet du second objet dans une seconde image, et la première image est une image provenant d'un premier appareil de prise de vue d'images, et
la sortie (302) d'un résultat de détection d'objet basé sur la confiance de fusion,
dans lequel la seconde image est une image de vue panoramique obtenue sur la base d'images provenant d'une pluralité d'appareils de prise de vue d'images répartis et montés autour d'une carrosserie d'un véhicule, dans lequel les régions de couverture de prise de vue d'images respectives de deux appareils de prise de vue d'images adjacents se chevauchent partiellement et la pluralité d'appareils de prise de vue d'images comprennent le premier appareil de prise de vue d'images ;
dans lequel l'obtention d'une confiance de fusion basée sur une première confiance et une seconde confiance comprend :
lorsque la première confiance est supérieure à un premier seuil et que la seconde confiance est supérieure à un deuxième seuil, la définition d'un premier poids correspondant à la première confiance et la définition d'un second poids correspondant à la seconde confiance, l'obtention de deux valeurs par : la pondération de la première confiance à l'aide du premier poids et la pondération de la seconde confiance à l'aide du second poids, et la détermination de la confiance de fusion par l'addition des deux valeurs obtenues après pondération ;
dans lequel le procédé comprend également
le fait de déterminer, sur la base d'un degré de coïncidence d'image du premier objet et du second objet, si le premier objet et le second objet sont un même objet ;
lorsque le degré de coïncidence d'image du premier objet et du second objet est supérieur à un troisième seuil, la détermination que le premier objet et le second objet sont le même objet ;
l'obtention de la première image à partir du premier appareil de prise de vue d'images ; et
l'assemblage des images provenant de la pluralité d'appareils de prise de vue d'images pour obtenir la seconde image.

2. Procédé selon la revendication 1, dans lequel l'obtention d'une confiance de fusion basée sur une première confiance et une seconde confiance comprend également :
lorsque la première confiance est inférieure ou égale au premier seuil et que la seconde confiance est supérieure au deuxième seuil, la détermination que la confiance de fusion est la seconde confiance.

3. Procédé selon la revendication 2, dans lequel la sortie d'un résultat de détection d'objet basé sur la confiance de fusion comprend :
la détermination que la confiance de fusion est supérieure à un quatrième seuil ; et
la sortie d'informations de positionnement du second objet détecté dans la seconde image.

4. Procédé selon la revendication 1, dans lequel l'obtention d'une confiance de fusion basée sur une première confiance et une seconde confiance comprend également :
lorsque la première confiance est supérieure à un premier seuil et que la seconde confiance est inférieure ou égale à un deuxième seuil, la détermination que la confiance de fusion est la première confiance.

5. Procédé selon la revendication 4, dans lequel la sortie d'un résultat de détection d'objet basé sur la confiance de fusion comprend :
la détermination que la confiance de fusion est supérieure à un quatrième seuil ; et
la sortie d'informations de positionnement du premier objet détecté dans la première image.

6. Appareil de détection d'objets, comprenant :
un module de traitement (1201), configuré pour obtenir une confiance de fusion basée sur une première confiance et une seconde confiance lorsqu'un premier objet et un second objet sont un même objet, dans lequel la première confiance est un niveau de fiabilité d'un résultat de détection pendant la détection d'objet du premier objet dans une première image, la seconde confiance est un niveau de fiabilité d'un résultat de détection pendant la détection d'objet du second objet dans une seconde image, et la première image est une image provenant d'un premier appareil de prise de vue d'images, et
un module d'interface (1202), configuré pour sortir un résultat de détection d'objet basé sur la confiance de fusion ;
dans lequel la seconde image est une image de vue panoramique obtenue sur la base d'images provenant d'une pluralité d'appareils de prise de vue d'images, et la pluralité d'appareils de prise de vue d'images comprennent le premier appareil de prise de vue d'images et sont répartis et montés autour d'une carrosserie d'un véhicule, dans lequel les régions de couverture de prise de vue d'images respectives de deux appareils de prise de vue d'images adjacents se chevauchent partiellement ;
dans lequel le module de traitement (1201) est configuré pour :
lorsque la première confiance est supérieure à un premier seuil et que la seconde confiance est supérieure à un deuxième seuil, définir un premier poids correspondant à la première confiance et définir un second poids correspondant à la seconde confiance, obtenir deux valeurs par : la pondération de la première confiance à l'aide du premier poids et la pondération de la seconde confiance à l'aide du second poids, et déterminer la confiance de fusion par l'addition des deux valeurs obtenues après pondération ;
dans lequel le module de traitement (1201) est configuré pour :
déterminer, sur la base d'un degré de coïncidence d'image du premier objet et du second objet, si le premier objet et le second objet sont un même objet ; et lorsque le degré de coïncidence d'image du premier objet et du second objet est supérieur à un troisième seuil, déterminer que le premier objet et le second objet sont le même objet, et
dans lequel le module de traitement (1201) est configuré pour : obtenir la première image à partir du premier appareil de prise de vue d'images ; et assembler les images provenant de la pluralité d'appareils de prise de vue d'images pour obtenir la seconde image.

7. Appareil selon la revendication 6, dans lequel le module de traitement (1201) est également configuré pour : lorsque la première confiance est inférieure ou égale au premier seuil et que la seconde confiance est supérieure au deuxième seuil, déterminer que la confiance de fusion est la seconde confiance.

8. Appareil selon la revendication 7, dans lequel le module de traitement (1201) est configuré pour déterminer que la confiance de fusion est supérieure à un quatrième seuil ; et
le module d'interface (1202) est configuré pour délivrer des informations de positionnement du second objet détecté dans la seconde image.

9. Appareil selon la revendication 6, dans lequel le module de traitement (1201) est configuré pour : lorsque la première confiance est supérieure à un premier seuil, et la seconde confiance est inférieure ou égale à un deuxième seuil, déterminer que la confiance de fusion est la première confiance.

10. Appareil selon la revendication 9, dans lequel le module de traitement (1201) est configuré pour déterminer que la confiance de fusion est supérieure à un quatrième seuil ; et
le module d'interface (1202) est configuré pour délivrer des informations de positionnement du premier objet détecté dans la première image.

11. Support de stockage lisible par ordinateur, comprenant un programme informatique, dans lequel le programme informatique est exécuté sur un ordinateur, l'ordinateur est activé pour réaliser le procédé selon l'une quelconque des revendications 1 à 5.
